# EUROPÄISCHE PATENTSCHRIFT

(11) **EP 3 581 747 B1**
(45) Veröffentlichungstag und Bekanntmachung des Hinweises auf die Patenterteilung: **29.11.2023**
(21) Anmeldenummer: 19179115.1
(22) Anmeldetag: 07.06.2019
(51) Int. Cl.: E05F 15/43

(54) **ÜBERWACHUNGSEINRICHTUNG**
MONITORING DEVICE
DISPOSITIF DE SURVEILLANCE

(30) Priorität: 13.06.2018 DE 102018209454
(43) Veröffentlichungstag der Anmeldung: 18.12.2019
(73) Patentinhaber: GEZE GmbH, 71229 Leonberg (DE)
(72) Erfinder: Hucker, Matthias, 76359 Marxzell (DE)

(56) Entgegenhaltungen:
- EP-A1- 1 619 469
- WO-A1-2019/072344
- DE-A1-102008 044 990
- US-A- 4 851 746

## Beschreibung

Die vorliegende Erfindung betrifft eine Überwachungseinrichtung zur Überwachung des Bewegungsbereichs einer Drehtür beim Öffnen und/oder Schließen auf Hindernisse mit einer mit dem Flügel der Drehtür mitbewegenden Sensoreinrichtung mit mindestens einem Abstandssensor und einer Auswerteeinrichtung zur Auswertung des von dem Abstandssensor gemessenen Abstands bei verschiedenen Türöffnungswinkeln.

Eine derartige Überwachungseinrichtung ist grundsätzlich bekannt und wird bei einer an einem Türrahmen mittels eines Türbandes drehbar gelagerten Drehtür dazu verwendet, ein sich gegebenenfalls im Bewegungsbereich der Drehtür befindliches Hindernis bzw. Objekt, wie zum Beispiel eine Person, zu erkennen. Hierfür ist üblicherweise auf der Bandseite des Flügels der Drehtür eine erste Sensoreinrichtung vorgesehen, welche den Bewegungsbereich in Richtung der Offenstellung der Drehtür überwacht, wohingegen auf der Bandgegenseite eine zweite Sensoreinrichtung den Bewegungsbereich in Richtung der Geschlossenstellung der Drehtür erfasst.

Die Erkennung des Objekts erfolgt beispielweise dadurch, dass die Auswerteeinrichtung der Überwachungseinrichtung eine Abweichung des bei einem bestimmten Türöffnungswinkel gemessenen Abstands von einem jeweiligen vorgegeben, hindernisfreien, Abstandswert ermittelt. Bei Detektion eines Objekts im Bewegungsbereich der Drehtür, d.h. bei Abweichung des bei einem bestimmten Türöffnungswinkel gemessenen Abstands von einem jeweiligen vorgegebenen Abstandswert kann ein Signal einer Signalerzeugungseinrichtung der Sensoreinrichtung dazu dienen, eine Bewegung der Drehtür zu stoppen, so dass das Objekt und/oder die Tür keinen Schaden nehmen.

Damit die Drehtür rechtzeitig vor einer Kollision mit dem Hindernis gestoppt werden kann, wird ein in Bewegungsrichtung der Drehtür vorgelagerter Bereich von der Sensoreinrichtung erfasst. Hierbei besteht jedoch die Möglichkeit, dass der Türrahmen bei einer Schließbewegung der Drehtür in den vorgelagerten Erfassungsbereich hineinragt und als Hindernis wahrgenommen wird. Infolgedessen wird die Bewegung der Drehtür gestoppt, so dass die Drehtür nicht vollständig geschlossen werden kann. Ebenso ist es möglich, dass sich die Drehtür nicht vollständig öffnen lässt, wenn ein ständiges (Wand) oder temporäres Hindernis, wie zum Beispiel eine bewegliche Trennwand, sich im Bereich der vollständigen Offenstellung der Drehtür befindet und somit als Hindernis erkannt wird.

Die DE 10 2008 044 990 A1 offenbart ein Verfahren und eine Vorrichtung zur verbesserten Ansteuerung und/oder Überwachung eines motorisch angetriebenen Flügels während der Öffnungsphase. Dafür ist vorgesehen, dass spätestens während des Öffnungsvorganges des Flügels zur Vermeidung einer Kollisions-Detektion eines in den Überwachungs- und Auslösebereich geratenden vorgegebenen Raumelementes und/oder des in den Überwachung- und Auslösebereich hineingeratenden sich öffnenden Flügels in der Auswerte- und/oder Steuerungseinrichtung und/oder in der Sensoreinrichtung eine Umschaltung durchgeführt wird.

Um diesen Nachteilen zu begegnen, sehen bisherige Lösungsvorschläge unter anderem vor, dass Randbereiche des Flügels der Drehtür von der Sensoreinheit grundsätzlich nicht erfasst werden. Ferner kann vorgesehen sein, dass die Auswerteeinrichtung der Sensoreinheit Signale ignoriert, welche im Bereich der Endstellungen der Drehtür von den jeweiligen Abstandssensoren erzeugt werden. Damit die Auswerteeinrichtung die in den Bereichen der Endstellungen erzeugten Signale von den dazwischen erzeugten Signalen differenzieren kann, ist es erforderlich, dass die Endstellungen von der Auswerteeinrichtung erfasst werden. Hierfür wird ein aufwendiger Initialisierungsvorgang benötigt, bei welchem eine vollständige Bewegung des Flügels der Drehtür zwischen den beiden Endstellungen der Drehtür vollführt wird. Ein derartiger Initialisierungsvorgang kann überdies jedes Mal dann nötig sein, wenn zum Beispiel die Trennwand umgestellt wird. Hinzu kommt, dass der Initialisierungsvorgang fehlerbehaftet sein kann, da gegebenenfalls nicht sämtliche stationären Einrichtungen im Bereich der Endstellung korrekt erfasst worden sind, beispielsweise bei einer transparenten Wand aus Glas oder wenn sich ein Heizkörper oder ein Regal vor der Wand befindet.

Bei den eben geschilderten Lösungsvorschlägen lässt sich daher ein ausreichender Kollisionsschutz nicht oder nur in aufwendiger Weise erreichen.

Es ist daher eine Aufgabe der Erfindung, die Überwachung des Bewegungsbereichs einer Drehtür beim Öffnen und/oder Schließen auf Hindernisse zu verbessern. Insbesondere ist es eine Aufgabe der Erfindung, eine Überwachungseinrichtung zu schaffen, welche eine vollständigere Absicherung des Bewegungsbereichs der Drehtür ermöglicht, aber keinen Initialisierungsvorgang benötigt.

Die Aufgabe wird mit einer Überwachungseinrichtung mit den Merkmalen des Anspruchs 1, einer Drehtür nach Anspruch 11 und einem Verfahren gemäß Anspruch 13 gelöst.

Die erfindungsgemäße Überwachungseinrichtung zur Überwachung des Bewegungsbereichs einer Drehtür beim Öffnen und/oder Schließen auf Hindernisse umfasst eine mit dem Flügel der Drehtür mitbewegende Sensoreinrichtung mit mindestens einem Abstandssensor und einer Auswerteeinrichtung zur Auswertung des von dem Abstandssensor gemessenen Abstands bei verschiedenen Türöffnungswinkeln und eine Signalerzeugungseinrichtung zur Erzeugung eines Signals bei Abweichung des bei einem bestimmten Türöffnungswinkel gemessenen Abstands von einem jeweiligen vorgegeben Abstandswert, wobei der für einen jeweiligen Türöffnungswinkel vorgegebene Abstandswert eines jeweiligen Abstandssensors in Bezug auf eine virtuelle Wand festgelegt ist, die für eine Endstellung der Drehtür definiert ist.

Der Erfindung liegt der allgemeine Gedanke zugrunde, den Bewegungsbereich einer Drehtür mittels einer Überwachungseinrichtung noch besser auf Hindernisse zu überwachen, indem mit Hilfe einer eine Endstellung einer Drehtür definierenden virtuellen Wand ein für einen jeweiligen Türöffnungswinkel vorgegebener Abstandswert zu einem Abstandssensor einer Sensoreinrichtung der Überwachungseinrichtung referenziert wird, wobei der vorgegebene Abstandswert dazu dient, mit einem von dem Abstandssensor bei einem bestimmten Türöffnungswinkel gemessenen Abstand mittels einer Auswerteeinrichtung der Sensoreinrichtung verglichen zu werden, und wobei ferner eine Signalerzeugungseinrichtung ein Signal erzeugt, wenn der gemessene Abstand von dem vorgegebenen Abstandswert bei einem bestimmten Türöffnungswinkel abweicht. Die virtuelle Wand ist dabei keine physisch greifbare Wand, bewirkt jedoch ebenso wie eine reale Wand, dass eine Bewegung des Flügels der Drehtür vor der Wand stoppt.

Da die Endstellung der Drehtür die Position der virtuellen Wand definiert, ergibt sich der Vorteil, dass ein Initialisierungsvorgang entbehrlich ist, welcher zur Bestimmung des tatsächlichen Erfassungsbereichs des Sensors dient.

Indem nur die virtuelle Wand eine Referenzfläche für die Überwachungseinrichtung darstellt, besteht ein weiterer Vorteil der Erfindung darin, dass ein sich in Bewegungsrichtung gesehen hinter der virtuellen Wand befindliches Objekt, beispielsweise der Rahmen einer Drehtür, kein Stoppen der Bewegung der Drehtür bewirkt, auch wenn das Objekt vom Abstandssensor der Überwachungseinrichtung erfasst wird. Somit lässt sich ein vollständiges Öffnen bzw. Schließen der Drehtür erreichen. Gleichzeitig werden sämtliche Objekte, welche sich zwischen der virtuellen Wand und der Drehtür befinden, als Hindernis erkannt.

Vorteilhafte Ausbildungen der Erfindung sind den Unteransprüchen, der Beschreibung und den Zeichnungen zu entnehmen.

Insbesondere bei automatischen Drehtüren, welche mittels einer motorischen Antriebseinheit bewegt werden, kann das von der Signalerzeugungseinrichtung erzeugte Signal erfindungsgemäß nicht nur dazu dienen, die Bewegung der Drehtür zu stoppen, sondern überdies die Bewegung zu reversieren, wodurch sich die Drehtür in entgegengesetzter Richtung von dem Objekt wegbewegt.

Damit ein Hindernis in Bewegungsrichtung der Drehtür rechtzeitig erkannt werden kann, ist es vorteilhaft, wenn ein Erfassungsbereich des Abstandssensors bezüglich des Flügels der Drehtür unter einem Neigungswinkel geneigt ist. Aufgrund dessen Neigung ist der Erfassungsbereich des Abstandssensors stets vorgelagert, wodurch die Überwachungseinrichtung ein Hindernis erkennt, bevor der Flügel der Drehtür mit diesem kollidiert.

Die Genauigkeit der Überwachungseinrichtung lässt sich erhöhen, indem die Auswertung des von dem Abstandssensor gemessenen Abstands erfindungsgemäß mittels der Auswerteeinrichtung in Abhängigkeit von mindestens einem der folgenden Parameter erfolgt:
- dem maximalen Türöffnungswinkel der Drehtür,
- dem Neigungswinkel des Erfassungsbereichs des Abstandssensors,
- einer Position des Abstandssensors an dem Flügel der Drehtür, insbesondere einem Abstand des Abstandssensors zu einer bezüglich der Drehachse der Drehtür zumindest annähernd parallel ausgerichteten Hochkante des Flügels der Drehtür, und/oder
- der Breite des Flügels der Drehtür.

Diese Parameter können beispielsweise bereits in der Überwachungseinrichtung abgespeichert sein. Es ist aber auch möglich, dass die Überwachungseinrichtung dazu ausgebildet ist, zumindest den Neigungswinkel und/oder den Türöffnungswinkel eigenständig zu messen. Hierfür kann bzw. können ein Potentiometer und/oder ein Beschleunigungssensor und/oder ein Gyroskop vorgesehen sein.

Der Kollisionsschutz ist besonders effizient, wenn die Signalerzeugungseinrichtung bei Unterschreitung des bei einem bestimmten Türöffnungswinkel gemessenen Abstands von dem jeweiligen vorgegeben Abstandswert ein Signal erzeugt.

Handelt es sich bei dem Hindernis bzw. Objekt um eine Person, so kann diese vor einer bevorstehenden Kollision mit der Drehtür gewarnt werden, indem erfindungsgemäß das von der Signalerzeugungseinrichtung erzeugte Signal ein optisches Signal und/oder ein akustisches Signal ist. Für das optische Signal kann eine Lichtquelle vorgesehen sein, welche beispielsweise gut erkennbar an der Drehtür angebracht ist. Ebenso kann für das akustische Signal ein Lautsprecher vorgesehen sein, welcher einen Signalton bei einer bevorstehenden Kollision mit der Drehtür abgibt. Zusätzlich oder alternativ kann das von der Signalerzeugungseinrichtung erzeugte Signal erfindungsgemäß auch das Stoppen der Drehflügeltür bewirken, wodurch eine Kollision verhindert oder zumindest abgemildert werden kann.

Vorteilhafterweise sind zwei Endstellungen vorgesehen, welche jeweils durch eine virtuelle Wand definiert sind und zwischen welchen der Flügel der Drehtür bewegbar ist. Dabei können ein maximaler Türöffnungswinkel eine Offenendstellung und ein minimaler Türöffnungswinkel, insbesondere ein Türöffnungswinkel von zumindest annähernd 0°, eine Geschlossenendstellung der Drehtür definieren.

Bevorzugt wird der vorgegebene Abstandswert bei einer Bewegung des Flügels der Drehtür in Richtung der Offenendstellung der Drehtür mit zunehmendem Türöffnungswinkel kleiner. Dahingegen wird der vorgegebene Abstandswert bei einer Bewegung des Flügels in Richtung der Geschlossenendstellung der Drehtür mit abnehmendem Türöffnungswinkel kleiner. Hat der Flügel der Drehtür dann eine der Endstellungen erreicht, so ist der vorgegebene Abstand in Richtung dieser Endstellung zumindest annähernd null. Es versteht sich, dass der vorgegebene Abstand in Richtung der jeweils anderen Endstellung dann einen maximalen Wert erreicht.

Um eine möglichst lückenlose Überwachung des Bewegungsbereichs der Drehtür zu erreichen, können mehrere Abstandssensoren vorgesehen sein, wobei die Erfassungsbereiche mindestens zweier, insbesondere benachbarter, Abstandssensoren zumindest teilweise überlappen. Die Sensoren bilden dann einen vorhangartigen Erfassungsbereich.

Gemäß einem Aspekt der Erfindung ist für einen gegebenen Türöffnungswinkel der vorgegebene Abstand für einen zur Drehachse der Drehtür näheren Abstandssensor kleiner ist als für einen zur Drehachse der Drehtür entfernteren Abstandssensor.

Zur berührungslosen Erfassung des Bewegungsbereichs der Drehtür kann mindestens ein Abstandssensor ein optischer Abstandssensor sein. Dabei sind verschiedene Arten der Erfassung des Bewegungsbereichs der Drehtür denkbar. So kann ein optischer Abstandssensor den Bewegungsbereich mittels mindestens eines Aktiv-Infrarot Strahls (AIR) abtasten. Der Aktiv-Infrarot Strahl wird dabei an einer Oberfläche reflektiert, wobei ein Hindernis anhand der Intensitätsänderung des reflektierten Aktiv-Infrarot Strahls erkannt werden kann. Auch lässt sich ein Abstand zu dem Boden innerhalb des Bewegungsbereichs der Drehtür bzw. zu einem Hindernis trigonometrisch bestimmen, wobei der optische Abstandssensor eine Sendeeinheit sowie eine zu der Sendeeinheit beabstandete Empfangseinheit umfasst. Ferner lässt sich der Abstand anhand der Laufzeit eines Lichtpulses, d.h. nach dem sogenannten Time-of-Flight-Prinzip messen (TOF-Sensoren). Es versteht sich, dass zusätzlich oder alternativ auch akustische Abstandssensoren verwendet werden können, welche einen Abstand in analoger Weise zu den vorstehend beschriebenen optischen Abstandssensoren erfassen.

Nachfolgend wird die Erfindung rein beispielhaft anhand einer möglichen Ausführungsform unter Bezugnahme auf die beigefügten Zeichnungen beschrieben. Es zeigen:
- Fig. 1: einen Horizontalschnitt einer Drehtür mit einer bekannten Überwachungseinrichtung zur Überwachung des Bewegungsbereichs der Drehtür auf Hindernisse;
- Fig. 2: eine Drehtür mit erfindungsgemäßer Überwachungseinrichtung in einer Geschlossenstellung;
- Fig. 3: die Drehtür von Fig. 2 in einer ersten Öffnungsstellung; und
- Fig. 4: die Drehtür von Fig. 2 in einer vorangeschrittenen zweiten Öffnungsstellung.

Die Figuren zeigen jeweils eine Überwachungseinrichtung 10 zur Überwachung des Bewegungsbereichs 12 einer Drehtür 14 beim Öffnen und/oder Schließen auf Hindernisse. Die Drehtür 14 umfasst einen an einem Türrahmen 16 um eine Drehachse A mittels eines Türbandes 18 drehbeweglich gelagerten Flügel 20, welcher zwischen zwei Endstellungen bewegbar ist. Dabei definieren ein minimaler Türöffnungswinkel αₘᵢₙ von zumindest annähernd 0° eine Geschlossenendstellung und ein maximaler Türöffnungswinkel αₘₐₓ eine Offenendstellung des Flügels 20.

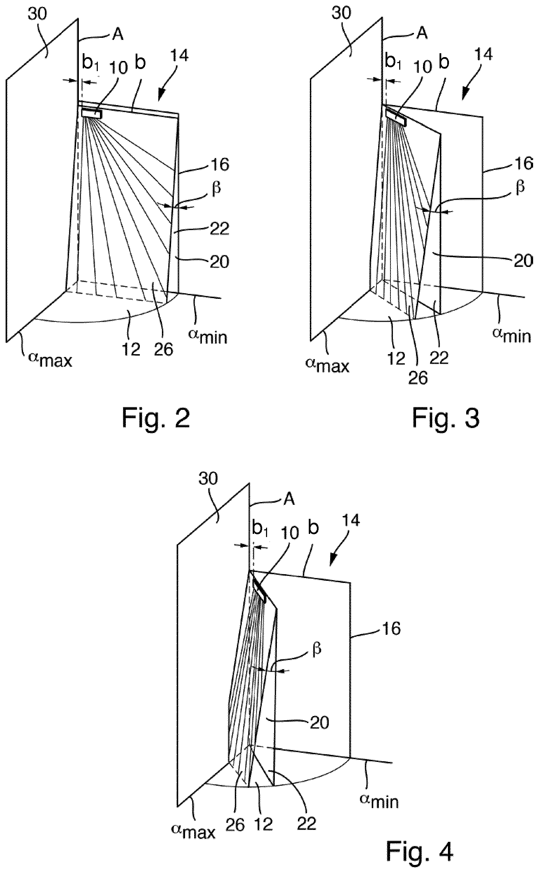

Auf gegenüberliegenden Seiten des Flügels 20 ist jeweils eine Überwachungseinrichtung 10 angebracht. Konkret ist jeweils eine Überwachungseinrichtung 10 auf der Bandseite 22 des Flügels 20 als auch auf der Bandgegenseite 24 des Flügels 20 angebracht, wobei in den Fig. 2 bis 4 lediglich die auf der Bandseite 22 angebrachte Überwachungseinrichtung 10 dargestellt ist. Die bandseitige Überwachungseinrichtung 10 dient zur Überwachung des Bewegungsbereichs 12 in Richtung der Offenendstellung des Flügels 20, wohingegen die bandgegenseitige Überwachungseinrichtung 10 verwendet wird, um den Bewegungsbereich 12 in Richtung der Geschlossenendstellung des Flügels 20 zu überwachen.

Jede der Überwachungseinrichtungen 10 umfasst eine sich mit dem Flügel 20 der Drehtür 14 mitbewegende Sensoreinrichtung, welche in den Figuren nicht genauer dargestellt ist. Die Sensoreinrichtung umfasst wiederum mindestens einen Abstandssensor und eine Auswerteeinrichtung zur Auswertung des von dem Abstandssensor gemessenen Abstands bei verschiedenen Türwinkeln. Konkret umfasst die Sensoreinrichtung mehrere Abstandssensoren, deren Erfassungsbereiche sich derart teilweise überlappen, dass sie zusammen einen vorhangartigen Erfassungsbereich 26 bilden. Wie besonders anhand der Fig. 2 bis 4 zu erkennen ist, ist der vorhangartige Erfassungsbereich 26 der Abstandssensoren gegenüber dem Flügel 20 der Drehtür 14 unter einem Neigungswinkel β geneigt.

Ferner umfasst jede der Überwachungseinrichtungen 10 eine in den Figuren ebenfalls nicht genauer dargestellte Signalerzeugungseinrichtung, welche dazu dient, ein Signal zu erzeugen, wenn ein von einem Abstandssensor bei einem bestimmten Türöffnungswinkel α des Flügels 20 gemessener Abstand von einem vorgegebenen Abstand abweicht.

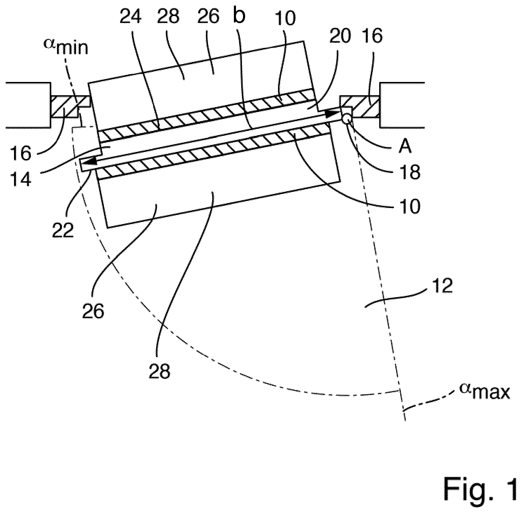

Fig. 1 zeigt einen Horizontalschnitt durch eine Drehtür 14 mit bereits bekannten Überwachungseinrichtungen 10 zur Überwachung des Bewegungsbereichs 12 der Drehtür 14 auf Hindernisse, wobei die Erfassungsbereiche 26 der Abstandssensoren der jeweiligen Überwachungseinrichtungen 10 als Projektion 28 auf den Boden dargestellt sind.

Anhand von Fig. 1 wird die Problematik deutlich, welche sich durch die Verwendung von konventionellen Überwachungseinrichtungen 10 ergibt. Bei einer Bewegung des Flügels 20 der Drehtür 14 in Richtung der Geschlossenendstellung der Drehtür 14 erfasst die an der Bandgegenseite 24 angebrachte Überwachungseinrichtung 10 kurz vor Erreichen der Geschlossenendstellung einen Abschnitt des Türrahmens 16, was von der Überwachungseinrichtung 10 als ein im Bewegungsbereich 12 befindliches Hindernis interpretiert wird. Um eine Kollision mit diesem vermeintlichen Hindernis zu vermeiden, kann die Überwachungseinrichtung 10 einen Bewegungsstopp des Flügels 20 der Drehtür 14 veranlassen, so dass der Flügel 20 der Drehtür 14 nicht in dessen Geschlossenendstellung gelangen kann und die Drehtür 14 bleibt offen. In vergleichbarer Weise kann ein sich in der Nähe der Offenendstellung der Drehtür 14 befindliches Objekt dazu führen, dass sich die Drehtür 14 nicht vollständig öffnen lässt.

Um dieser Problematik zu begegnen ist erfindungsgemäß vorgesehen, für jede der Endstellungen der Drehtür 14 jeweils eine virtuelle Wand 30 vorzusehen, welche der Einfachheit halber in Fig. 2 bis 4 lediglich für die Offenendstellung der Drehtür 14 dargestellt ist. Es versteht sich, dass in vergleichbarer Weise auch eine virtuelle Wand für die Geschlossenendstellung der Drehtür 14 vorgesehen sein kann.

Für jeden der Abstandssensoren sowie für jeweilige Türöffnungswinkel α ist ein bestimmter Abstandswert zu der virtuellen Wand vorgegeben, d.h. für jeden Abstandssensor und für jeweilige Türöffnungswinkel α ist in Bezug auf die virtuelle Wand ein vorgegebener Abstandswert festgelegt. Dabei ist für einen gegebenen Türöffnungswinkel α der vorgegebene Abstand zur virtuellen Wand 30 für einen zur Drehachse A der Drehtür 14 näheren Abstandssensor kleiner als für einen zur Drehachse A der Drehtür 14 entfernteren Abstandssensor, wie anhand von Fig. 4 besonders deutlich zu erkennen ist. Überdies wird der vorgegebene Abstandswert für die bandseitige Überwachungseinrichtung 10 bei einer Bewegung des Flügels 20 der Drehtür 14 in Richtung der Offenendstellung der Drehtür 14 mit zunehmenden Türöffnungswinkel α kleiner, bis der für jeden Abstandssensor vorgegebene Abstandswert bei dem in der Offenendstellung befindliche Flügel 20 der Drehtür 14 zumindest annähernd null ist. Dahingegen wird der vorgegebene Abstandswert für die bandgegenseitige Überwachungseinrichtung 10 bei einer Bewegung des Flügels 20 der Drehtür 14 in Richtung der Geschlossenendstellung der Drehtür 14 mit abnehmenden Türöffnungswinkel α kleiner, bis der für jeden Abstandssensor vorgegebene Abstandswert dann in der Geschlossenendstellung zumindest annähernd null ist.

In dem in Fig. 2 bis 4 dargestellten Ausführungsbeispiel wird der Abstand mittels optischer Abstandssensoren gemessen, wobei es auch denkbar ist, dass mindestens ein Abstandssensor den Abstand akustisch erfasst. Der von einem jeweiligen Abstandssensor bei einem jeweiligen Türöffnungswinkel erfasste Abstand wird anschließend mit dem bei diesem Türöffnungswinkel vorgegebenen Abstandswert mittels der Auswerteeinrichtung verglichen. Dabei berücksichtigt die Auswerteeinrichtung mindestens einen der folgenden Parameter: den maximalen Türöffnungswinkel αₘₐₓ, den Neigungswinkel β des Erfassungsbereichs 26 der jeweiligen Abstandssensoren, einen Abstand b₁ des jeweiligen Abstandssensors zu einer bezüglich der Drehachse A zumindest parallel ausgerichteten und der Drehachse A zugewandten Hochkante der Drehtür 14 und/oder die Breite b des Flügels 20 der Drehtür 14. Dabei kann mindestens einer der vorstehend aufgeführten Parameter in der Sensoreinrichtung der Überwachungseinrichtung 10 gespeichert sein. Es ist aber auch denkbar, dass die Sensoreinrichtung dazu ausgebildet ist, den Neigungswinkel β und/oder den Türöffnungswinkel α eigenständig zu messen, beispielsweise mittels eines Potentiometers, eines Gyroskops oder eines Beschleunigungssensors.

Stellt die Auswerteeinrichtung beim Vergleich des bei einem jeweiligen Türöffnungswinkel α gemessenen Abstands mit dem vorgegebenen Abstandswert fest, dass der gemessene Abstand den vorgegebenen Abstandswert unterschreitet, so interpretiert die Auswerteeinrichtung 10 dieses Ereignis als ein im Bewegungsbereich 12 befindliches Hindernis. Infolgedessen wird die Signalerzeugungseinrichtung dazu veranlasst, ein Signal zu erzeugen. Dieses Signal kann beispielsweise ein akustischer Warnton oder ein optisches Signal sein. Bevorzugt veranlasst das Signal das Abbremsen insbesondere das Stoppen der Bewegung des Flügels 20 der Drehtür 14, so dass eine Kollision des Flügels 20 der Drehtür 14 mit dem Hindernis vermieden wird.

### Bezugszeichenliste

- 10: Überwachungseinrichtung
- 12: Bewegungsbereich
- 14: Drehtür
- 16: Türrahmen
- 18: Türband
- 20: Flügel
- 22: Bandseite
- 24: Bandgegenseite
- 26: Erfassungsbereich
- 28: Projektion des Erfassungsbereichs
- 30: virtuelle Wand

- A: Drehachse

- α: Türöffnungswinkel
- αₘᵢₙ: minimaler Türöffnungswinkel
- αₘₐₓ: maximaler Türöffnungswinkel
- β: Neigungswinkel

- b₁: Abstand
- b: Breite des Flügels

## Patentansprüche

1. Überwachungseinrichtung (10) zur Überwachung des Bewegungsbereichs (12) einer Drehtür (14) beim Öffnen und/oder Schließen auf Hindernisse mit einer mit dem Flügel (20) der Drehtür (14) mitbewegenden Sensoreinrichtung mit mindestens einem Abstandssensor und einer Auswerteeinrichtung zur Auswertung des von dem Abstandssensor gemessenen Abstands bei verschiedenen Türöffnungswinkeln (α) und einer Signalerzeugungseinrichtung zur Erzeugung eines Signals bei Abweichung des bei einem bestimmten Türöffnungswinkel (α) gemessenen Abstands von einem jeweiligen vorgegeben Abstandswert, wobei das Signal ein akustisches und/oder optisches Signal ist und/oder ein Stoppen des Flügels (14) der Drehtür (20) und/oder ein Reversieren der Bewegung des Flügels (14) der Drehtür (20) bewirkt und wobei der für einen jeweiligen Türöffnungswinkel (α) vorgegebene Abstandswert eines jeweiligen Abstandssensors in Bezug auf eine virtuelle Wand (30) festgelegt ist, die für eine Endstellung der Drehtür (14) definiert ist,
**dadurch gekennzeichnet, dass**
die Auswertung des von dem Abstandssensor gemessenen Abstands mittels der Auswerteeinrichtung in Abhängigkeit von mindestens einem der folgenden Parameter erfolgt:
- dem maximalen Türöffnungswinkel (αₘₐₓ) der Drehtür (14),
- einem Neigungswinkel (β) des Erfassungsbereichs (26) des Abstandssensors,
- einer Position des Abstandssensors an dem Flügel (20) der Drehtür (14), insbesondere einem Abstand (b1) des Abstandssensors zu einer bezüglich der Drehachse (A) der Drehtür (14) zumindest annähernd parallel ausgerichteten Hochkante des Flügels (20) der Drehtür (14), und/oder
- der Breite (b) des Flügels (20) der Drehtür (14).

2. Überwachungseinrichtung (10) nach Anspruch 1,
**dadurch gekennzeichnet, dass**
ein Erfassungsbereich (26) des Abstandssensors bezüglich des Flügels (20) der Drehtür (14) unter dem Neigungswinkel (β) geneigt ist.

3. Überwachungseinrichtung (10) nach Anspruch 1,
**dadurch gekennzeichnet, dass**
zumindest einer der Parameter in der Überwachungseinrichtung (10) gespeichert ist und/oder die Überwachungseinrichtung (10) dazu ausgebildet ist, zumindest den Neigungswinkel (β) und/oder den Türöffnungswinkel (α) eigenständig zu messen.

4. Überwachungseinrichtung (10) nach zumindest einem der vorstehenden Ansprüche,
**dadurch gekennzeichnet, dass**
die Signalerzeugungseinrichtung bei Unterschreitung des bei einem bestimmten Türöffnungswinkel (α) gemessenen Abstands von dem jeweiligen vorgegeben Abstandswert ein Signal erzeugt.

5. Überwachungseinrichtung (10) nach zumindest einem der vorstehenden Ansprüche,
**dadurch gekennzeichnet, dass**
zwei Endstellungen vorgesehen sind, zwischen welchen der Flügel (20) der Drehtür (14) bewegbar ist, wobei ein maximaler Türöffnungswinkel (αₘₐₓ) eine Offenendstellung und ein minimaler Türöffnungswinkel (αₘᵢₙ), insbesondere ein Türöffnungswinkel (α) von zumindest annähernd 0°, eine Geschlossenendstellung der Drehtür (14) definieren.

6. Überwachungseinrichtung (10) nach Anspruch 5,
**dadurch gekennzeichnet, dass**
der vorgegebene Abstandswert in Richtung der Offenendstellung der Drehtür (14) mit zunehmendem Türöffnungswinkel (α) kleiner wird, und/oder der vorgegebene Abstandswert in Richtung der Geschlossenendstellung der Drehtür (14) mit abnehmendem Türöffnungswinkel (α) kleiner wird.

7. Überwachungseinrichtung (10) nach zumindest einem der vorstehenden Ansprüche,
**dadurch gekennzeichnet, dass**
der vorgegebene Abstand in einer Endstellung zumindest annähernd null ist.

8. Überwachungseinrichtung (10) nach zumindest einem der vorstehenden Ansprüche,
**dadurch gekennzeichnet, dass**
mehrere Abstandssensoren vorgesehen sind, wobei die Erfassungsbereiche (26) mindestens zweier, insbesondere benachbarter, Abstandssensoren zumindest teilweise überlappen.

9. Überwachungseinrichtung (10) nach Anspruch 8,
**dadurch gekennzeichnet, dass**
für einen gegebenen Türöffnungswinkel (α) der vorgegebene Abstand für einen zur Drehachse (A) der Drehtür (14) näheren Abstandssensor kleiner ist als für einen zur Drehachse (A) der Drehtür (14) entfernteren Abstandssensor.

10. Überwachungseinrichtung (10) nach zumindest einem der vorstehenden Ansprüche,
**dadurch gekennzeichnet, dass**
mindestens ein Abstandssensor ein optischer oder ein akustischer Abstandssensor ist.

11. Drehtür (14) mit einem an einem Türrahmen (16) um eine Drehachse (A) drehbeweglich gelagerten Flügel (20) und einer Überwachungseinrichtung (10) nach zumindest einem der vorstehenden Ansprüche.

12. Drehtür (14) nach Anspruch 11,
**gekennzeichnet durch**
eine Einrichtung, welche ein Abbremsen einer Bewegung des Flügels (20) der Drehtür (14), insbesondere ein Stoppen des Flügels (20) der Drehtür (14), in Ansprechen auf das Signal der Signalerzeugungseinrichtung veranlasst.

13. Verfahren zur Überwachung des Bewegungsbereichs (12) einer Drehtür (14) beim Öffnen und/oder Schließen auf Hindernisse mittels einer Überwachungseinrichtung (10) nach zumindest einem der Ansprüche 1 bis 10, die folgenden Schritte umfassend:
- Festlegen eines vorgegebenen Abstandwerts zwischen mindestens einem Abstandssensor einer sich mit einem Flügel (20) der Drehtür (14) mitbewegenden Sensoreinrichtung und einer eine Endstellung der Drehtür (14) definierenden virtuellen Wand (30) für verschiedene Türöffnungswinkel (α) der Drehtür (14);
- Erfassen eines Abstands mittels des mindestens einen Abstandssensors;
- Auswerten des von dem Abstandssensor bei verschiedenen Türöffnungswinkeln (α) gemessenen Abstands mittels einer Auswerteeinrichtung der Sensoreinrichtung;
- Vergleichen des gemessenen Abstands mit dem vorgegebenen Abstandswert; und
- Erzeugen eines Signals mittels einer Signalerzeugungseinrichtung bei Abweichung, insbesondere bei Unterschreitung, des gemessenen Abstands von dem jeweiligen vorgegebenen Abstandswert.

14. Verfahren nach Anspruch 13, ferner den Schritt umfassend:
- Abbremsen, insbesondere Stoppen, einer Bewegung des Flügels (20) der Drehtür (14) in Ansprechen des von der Signalerzeugungseinrichtung erzeugten Signals.

## Claims

1. Monitoring device (10) for monitoring the movement region (12) of a swivel door (14), during opening and/or closing, for obstacles, having a sensor device that moves with the leaf (20) of the swivel door (14) and has at least one distance sensor and an evaluation device for evaluating the distance measured by the distance sensor for different door opening angles (α), and a signal generating device for generating a signal when the distance measured for a particular door opening angle (α) differs from a respective predefined distance value, wherein the signal is an acoustic and/or optical signal and/or causes the leaf (14) of the swivel door (20) to be stopped and/or the movement of the leaf (14) of the swivel door (20) to be reversed, and wherein the distance value from a respective distance sensor, which is predefined for a respective door opening angle (α), is determined with respect to a virtual wall (30) which is defined for an end position of the swivel door (14),
**characterized in that**
the distance measured by the distance sensor is evaluated by means of the evaluation device on the basis of at least one of the following parameters:
- the maximum door opening angle (αₘₐₓ) of the swivel door (14),
- an inclination angle (β) of the capture region (26) of the distance sensor,
- a position of the distance sensor on the leaf (20) of the swivel door (14), in particular a distance (b1) between the distance sensor and a vertical edge of the leaf (20) of the swivel door (14), which vertical edge is oriented at least approximately parallel to the axis of rotation (A) of the swivel door (14), and/or
- the width (b) of the leaf (20) of the swivel door (14) .

2. Monitoring device (10) according to Claim 1,
**characterized in that**
a capture region (26) of the distance sensor is inclined at the inclination angle (β) with respect to the leaf (20) of the swivel door (14).

3. Monitoring device (10) according to Claim 1,
**characterized in that**
at least one of the parameters is stored in the monitoring device (10) and/or the monitoring device (10) is designed to independently measure at least the inclination angle (β) and/or the door opening angle (α).

4. Monitoring device (10) according to at least one of the preceding claims,
**characterized in that**
the signal generating device generates a signal if the distance measured for a particular door opening angle (α) falls below the respective predefined distance value.

5. Monitoring device (10) according to at least one of the preceding claims,
**characterized in that**
two end positions are provided, between which the leaf (20) of the swivel door (14) can be moved, wherein a maximum door opening angle (αₘₐₓ) defines an open end position and a minimum door opening angle (αₘᵢₙ), in particular a door opening angle (α) of at least approximately 0°, defines a closed end position of the swivel door (14).

6. Monitoring device (10) according to Claim 5,
**characterized in that**
the predefined distance value becomes smaller in the direction of the open end position of the swivel door (14) with increasing door opening angle (α), and/or the predefined distance value becomes smaller in the direction of the closed end position of the swivel door (14) with decreasing door opening angle (α) .

7. Monitoring device (10) according to at least one of the preceding claims,
**characterized in that**
the predefined distance in an end position is at least approximately zero.

8. Monitoring device (10) according to at least one of the preceding claims,
**characterized in that**
a plurality of distance sensors are provided, wherein the capture regions (26) of at least two distance sensors, in particular adjacent distance sensors, at least partially overlap.

9. Monitoring device (10) according to Claim 8,
**characterized in that**
for a given door opening angle (α), the predefined distance for a distance sensor closer to the axis of rotation (A) of the swivel door (14) is shorter than for a distance sensor more remote from the axis of rotation (A) of the swivel door (14).

10. Monitoring device (10) according to at least one of the preceding claims,
**characterized in that**
at least one distance sensor is an optical or acoustic distance sensor.

11. Swivel door (14) having a leaf (20) that is mounted on a door frame (16) so as to be rotatable about an axis of rotation (A) and a monitoring device (10) according to at least one of the preceding claims.

12. Swivel door (14) according to Claim 11,
**characterized by**
a device which causes a movement of the leaf (20) of the swivel door (14) to be braked, in particular causes the leaf (20) of the swivel door (14) to be stopped, in response to the signal from the signal generating device.

13. Method for monitoring the movement region (12) of a swivel door (14), during opening and/or closing, for obstacles by means of a monitoring device (10) according to at least one of Claims 1 to 10, comprising the following steps of:
- determining a predefined distance value between at least one distance sensor of a sensor device moving with a leaf (20) of the swivel door (14) and a virtual wall (30) defining an end position of the swivel door (14) for different door opening angles (α) of the swivel door (14);
- capturing a distance by means of the at least one distance sensor;
- evaluating the distance measured by the distance sensor for different door opening angles (α) by means of an evaluation device of the sensor device,
- comparing the measured distance with the predefined distance value; and
- generating a signal by means of a signal generating device if the measured distance differs from, in particular falls below, the respective predefined distance value.

14. Method according to Claim 13, also comprising the step of:
- braking, in particular stopping, a movement of the leaf (20) of the swivel door (14) in response to the signal generated by the signal generating device.

## Revendications

1. Dispositif de surveillance (10) destiné à surveiller la zone de déplacement (12) d'une porte pivotante (14) lors de l'ouverture et/ou de la fermeture en vue de la présence d'obstacles, comprenant un dispositif capteur, pourvu d'au moins un capteur d'écart, qui accompagne le mouvement du battant (20) de la porte pivotante (14) et d'un dispositif d'interprétation destiné à interpréter l'écart mesuré par le capteur d'écart à différents angles d'ouverture de porte (α) et d'un dispositif de génération de signal destiné à générer un signal en cas de différence entre l'écart mesuré à un angle d'ouverture de porte (α) déterminé par rapport à une valeur d'écart respectivement prédéfinie, le signal étant un signal sonore et/ou visuel et/ou provoquant un arrêt du battant (14) de la porte pivotante (20) et/ou une inversion de sens du mouvement du battant (14) de la porte pivotante (20) et la valeur d'écart d'un capteur d'écart respectif, prédéfinie pour un angle d'ouverture de porte (α) respectif, étant spécifiée en référence à un mur virtuel (30) qui est défini pour une position finale de la porte pivotante (14),
**caractérisé en ce que**
l'interprétation, au moyen du dispositif d'interprétation, de l'écart mesuré par le capteur d'écart s'effectue en fonction d'au moins l'un des paramètres suivants :
- l'angle d'ouverture de porte maximal (αₘₐₓ) de la porte pivotante (14),
- un angle d'inclinaison (β) de la zone de détection (26) du capteur d'écart,
- une position du capteur d'écart au niveau du battant (20) de la porte pivotante (14), notamment un écart (b1) du capteur d'écart par rapport à un bord haut du battant (20) de la porte pivotante (14) orienté au moins approximativement parallèlement à l'axe de rotation (A) de la porte pivotante (14), et/ou
- la largeur (b) du battant (20) de la porte pivotante (14) .

2. Dispositif de surveillance (10) selon la revendication 1, **caractérisé en ce que** la zone de détection (26) du capteur d'écart est inclinée selon l'angle d'inclinaison (β) par rapport au battant (20) de la porte pivotante (14).

3. Dispositif de surveillance (10) selon la revendication 1, **caractérisé en ce qu'**au moins l'un des paramètres est mémorisé dans le dispositif de surveillance (10) et/ou le dispositif de surveillance (10) est configuré pour mesurer de manière autonome au moins l'angle d'inclinaison (β) et/ou l'angle d'ouverture de porte (α).

4. Dispositif de surveillance (10) selon au moins l'une des revendications précédentes, **caractérisé en ce que** le dispositif de génération de signal génère un signal dans le cas où l'écart mesuré à un angle d'ouverture de porte (α) déterminé devient inférieur à la valeur d'écart respectivement prédéfinie.

5. Dispositif de surveillance (10) selon au moins l'une des revendications précédentes, **caractérisé en ce que** deux positions finales sont prévues, entre lesquelles peut se déplacer le battant (20) de la porte pivotante (14), un angle d'ouverture de porte maximal (αₘₐₓ) définissant une position finale d'ouverture et un angle d'ouverture de porte minimal (αₘᵢₙ), notamment un angle d'ouverture de porte (α) d'au moins approximativement 0°, une position finale de fermeture de la porte pivotante (14) .

6. Dispositif de surveillance (10) selon la revendication 5, **caractérisé en ce que** la valeur d'écart prédéfinie devient plus petite en direction de la position finale d'ouverture de la porte pivotante (14) à mesure que l'angle d'ouverture de porte (α) augmente et/ou la valeur d'écart prédéfinie devient plus petite en direction de la position finale de fermeture de la porte pivotante (14) à mesure que l'angle d'ouverture de porte (α) diminue.

7. Dispositif de surveillance (10) selon au moins l'une des revendications précédentes, **caractérisé en ce que** l'écart prédéfini dans une position finale est au moins approximativement égal à zéro.

8. Dispositif de surveillance (10) selon au moins l'une des revendications précédentes, **caractérisé en ce que** plusieurs capteurs d'écart sont prévus, les zones de détection (26) d'au moins deux capteurs d'écart, notamment voisins, se chevauchant au moins partiellement.

9. Dispositif de surveillance (10) selon la revendication 8, **caractérisé en ce que** pour un angle d'ouverture de porte (α) donné, l'écart prédéfini pour un capteur d'écart le plus proche de l'axe de rotation (A) de la porte pivotante (14) est inférieur à celui pour un capteur d'écart le plus éloigné de l'axe de rotation (A) de la porte pivotante (14).

10. Dispositif de surveillance (10) selon au moins l'une des revendications précédentes, **caractérisé en ce qu'**au moins un capteur d'écart est un capteur d'écart optique ou acoustique.

11. Porte pivotante (14) comprenant un battant (20) monté sur un cadre de porte (16) mobile en rotation autour d'un axe de rotation (A) et un dispositif de surveillance (10) selon au moins l'une des revendications précédentes.

12. Porte pivotante (14) selon la revendication 11, **caractérisée par** un dispositif qui provoque un freinage d'un mouvement du battant (20) de la porte pivotante (14), notamment un arrêt du battant (20) de la porte pivotante (14), en réaction au signal du dispositif de génération de signal.

13. Procédé de surveillance de la zone de déplacement (12) d'une porte pivotante (14) lors de l'ouverture et/ou de la fermeture en vue de la présence d'obstacles au moyen d'un dispositif de surveillance (10) selon au moins l'une des revendications 1 à 10, lequel comprend les étapes suivantes :
- spécification d'une valeur d'écart prédéfinie entre au moins un capteur d'écart d'un dispositif capteur qui accompagne le mouvement d'un battant (20) de la porte pivotante (14) et un mur virtuel (30) qui définit une position finale de la porte pivotante (14) pour différents angles d'ouverture de porte (α) de la porte pivotante (14) ;
- acquisition d'un écart au moyen de l'au moins un capteur d'écart ;
- interprétation de l'écart mesuré par le capteur d'écart à différents angles d'ouverture de porte (α) au moyen d'un dispositif d'interprétation du dispositif capteur ;
- comparaison de l'écart mesuré avec la valeur d'écart prédéfinie ; et
- génération d'un signal au moyen d'un dispositif de génération de signal dans le cas où l'écart mesuré est différent de, notamment devient inférieur à, la valeur d'écart respectivement prédéfinie.

14. Procédé selon la revendication 13, comprenant en outre l'étape suivante :
- freinage, notamment arrêt, d'un mouvement du battant (14) de la porte pivotante (20) en réaction au signal généré par le dispositif de génération de signal.
